# EUROPÄISCHE PATENTSCHRIFT

(11) **EP 3 696 929 B1**
(45) Veröffentlichungstag und Bekanntmachung des Hinweises auf die Patenterteilung: **09.11.2022**
(21) Anmeldenummer: 19157422.7
(22) Anmeldetag: 15.02.2019
(51) Int. Cl.: H02J 1/02

(54) **ENERGIEVERSORGUNGSNETZWERK**
ENERGY SUPPLY NETWORK
RÉSEAU D'ALIMENTATION EN ÉNERGIE

(43) Veröffentlichungstag der Anmeldung: 19.08.2020
(73) Patentinhaber: Siemens Energy Global GmbH & Co. KG, 81739 München (DE)
(72) Erfinder: Handt, Karsten, 92348 Berg (DE); Nielebock, Sebastian, 91301 Forchheim (DE); Pfeifer, Markus, 90455 Nürnberg (DE); Weidauer, Jens, 90763 Fürth (DE)

(56) Entgegenhaltungen:
- WO-A1-2017/066985
- A C Kyritsis ET AL: "A novel Parallel Active Filter for Current Pulsation Smoothing on Single Stage Grid-connected AC-PV Modules Acknowledgement", Amfitheas, 19. Dezember 2014 (2014-12-19), Seite 309466925, XP055159769, Gefunden im Internet: URL:http://ieeexplore.ieee.org/ielx5/44171 96/4417197/04417545.pdf?tp=&arnumber=44175 45&isnumber=4417197 [gefunden am 2014-12-19]

## Beschreibung

Die Erfindung betrifft ein Energieversorgungsnetzwerk, das eine Busleitung mit einer Leitungsimpedanz zur Energieverteilung und eine Anzahl an leistungselektronischen Wandlern mit einer jeweiligen Kommutierungskapazität umfasst.

Energieversorgungsnetzwerke werden zur Energieversorgung von Industrieanlagen und Gebäuden genutzt. Ein Großteil der elektrischen Komponenten, seien es Energieerzeuger, Energieverbraucher oder Energiespeicher, werden unter Zwischenschaltung eines zugeordneten leistungselektronischen Wandlers (sog. Stromrichter) an die Busleitung des Energieversorgungsnetzwerks angeschlossen.

Leistungselektronische Wandler weisen üblicherweise einen Spannungszwischenkreis mit einer Zwischenkreiskapazität auf, welcher in Verbindung mit der Leitungsimpedanz der Busleitung des Energieversorgungsnetzwerks ein schwingfähiges System bildet. Die in dem Spannungszwischenkreis enthaltene Zwischenkreiskapazität muss einerseits bei einem auftretenden Netz-/Anlagenfehler eine Energiespeicherfunktion übernehmen. Andererseits dient sie zur Spannungsglättung, damit eine Regelung des zugeordneten leistungselektronischen Wandlers zuverlässig funktioniert.

Aufgrund der Notwendigkeit im Fehlerfall eine Energiespeicherung zu übernehmen, sind die aus dem Stand der Technik bekannten leistungselektronischen Wandler eines Energieversorgungsnetzwerks mit einer Speicherkapazität solcher Größe ausgelegt, die es ihnen ermöglicht, einen Netzausfall von mehreren Millisekunden bei einer vorgegebenen Nennlast zu überbrücken. Die Speicherkapazität variiert dabei je nach Leistungsklasse und kann im Verbund mehrere mF annehmen. Bei Leitungslängen der Busleitung im Bereich von einigen Metern bis zu einigen 100 Metern werden Resonanzfrequenzen im dreistelligen Hertz-Bereich bis im einstelligen Kilohertz-Bereich erreicht. Durch verschiedene Schalthandlungen, wie z.B. das Ab- oder Zuschalten von elektrischen Komponenten des Energieversorgungsnetzwerks, oder aufgrund von dynamischen Sollwertänderungen, können Resonanzen in dem genannten Frequenzbereich angeregt werden.

Ein Ziel bei der Auslegung eines Energieversorgungsnetzwerks besteht darin, die Resonanzfrequenz in einem definierten Bereich, vorzugsweise im zwei-/dreistelligen Kilohertz-Bereich, zu definieren, damit in dem Energieversorgungsnetzwerk Lastzyklen nicht zu Schwingungen führen. Durch die Notwendigkeit, die Zwischenkreiskapazität eines jeweiligen leistungselektronischen Wandlers derart zu dimensionieren, dass eine Energiespeichermöglichkeit im Fehlerfall gegeben ist, verschiebt sich die Resonanzfrequenz jedoch in unerwünschter Weise nach unten.

Derzeit verfügbare leistungselektronische Wandler beschränken damit die maximale Ausdehnung des Energieversorgungsnetzwerks, insbesondere der Busleitung, bei gleichzeitiger Limitierung der maximalen Speicherkapazität der Zwischenkreiskapazität, um eine unabhängige stabile Regelung der einzelnen leistungselektronischen Wandler realisieren zu können.

Ist das Energieversorgungsnetzwerk statisch, wie dies z.B. bei Inselnetzen der Fall ist, so kann auch vorab eine Systemsimulation durchgeführt werden, um Aussagen zur Stabilität des Energieversorgungsnetzwerks, sowie deren Parametrierung zu erhalten.

WO2017/066985A1 offenbart ein Energieversorgungsnetz aufweisend eine Busleitung und einen an diese angeschlossenen leistungselektronischen Wandler. An die Busleistung ist zur Unterdrückung von unerwünschten Schwingungen ein zuschaltbarer Energiespeicher vorgesehen.

Es ist Aufgabe der Erfindung, ein Energieversorgungsnetzwerk bereitzustellen, bei dem eine Resonanzfrequenz zur Vermeidung der Anregung von Schwingungen möglichst hoch ist.

Diese Aufgabe wird gelöst durch ein Energieversorgungsnetzwerk gemäß den Merkmalen des Anspruchs 1. Vorteilhafte Ausgestaltungen ergeben sich aus den abhängigen Patentansprüchen.

Es wird ein Energieversorgungsnetzwerk vorgeschlagen, das eine Busleitung mit einer Leitungsimpedanz zur Energieverteilung und eine Anzahl an leistungselektronischen Wandlern mit einer jeweiligen Kommutierungskapazität umfasst. Die Speicherkapazität (d.h. Größe) einer jeweiligen Kommutierungskapazität ist dabei derart gewählt, dass im Betrieb des Energieversorgungsnetzwerks eine Regelung des zugeordneten leistungselektronischen Wandlers gewährleistet ist und bei einer Kommutierung eine Spannungsüberhöhung beherrscht wird. Zusätzlich umfasst das Energieversorgungsnetzwerk zumindest einen Energiespeicher, der mittels Steuerung einer Schaltvorrichtung durch eine Recheneinheit selektiv mit der Busleitung verbindbar ist, wobei die Speicherkapazität des Energiespeichers wesentlich größer als die Speicherkapazität einer jeweiligen Kommutierungskapazität ist.

Durch die Separation der einzelnen Funktionen des Spannungszwischenkreises kann eine Optimierung des Energieversorgungsnetzwerks, insbesondere eines Gleichspannungsnetzwerks, d.h. eines Energieversorgungsnetzwerks, dessen Busleitung mit einer Gleichspannung (DC-Spannung) beaufschlagt ist, sichergestellt werden. Die leistungselektronischen Wandler erhalten hierzu eine minimale Ein-/Ausgangskapazität in Gestalt der Kommutierungskapazität, welche einen Spannungsripple soweit minimiert, dass eine Regelung läuft und die Spannungsüberhöhung bei der Kommutierung beherrscht wird. Die Funktionalität des Energiespeicherns wird über den an die Busleitung selektiv zuschalt- und regelbaren Energiespeicher realisiert. Dieser Energiespeicher kann neben der Bereitstellung von Energie im Netzausfall bzw. einer Zwischenspeicherung von rotatorischer Energie bei Rückspeisung die Aufgabe, das Energieversorgungsnetz in Form eines aktiven Filters zu stabilisieren. Auf diese Weise ist es möglich, die Resonanzfrequenz des Energieversorgungsnetzwerks zu erhöhen, indem die als Zwischenkreiskapazität dienenden Kommutierungskapazitäten minimal gehalten werden. Es ist möglich, Fehlerenergien zu reduzieren, da diese von dem Energiespeicher, der selektiv über eine steuerbare Schaltvorrichtung an die Busleitung anschließbar ist, übernommen werden. Insbesondere ist es auch möglich, eine aktive Filterung von Spannungsoszillationen bereitzustellen, indem aktiv Ströme gegenphasig zur Oszillation eingeprägt werden. Ein weiterer Vorteil des erfindungsgemäß vorgeschlagenen Vorgehens besteht darin, dass der Energieinhalt des Energiespeichers vollständig ausgenutzt werden kann, da durch die steuerbare Schaltvorrichtung in Form eines Hoch/Tiefsetzstellers einen weiteren Spannungsbereichs des Energiespeichers ausnutzen kann. Im Vergleich zu einer, in herkömmlicher Größe dimensionierten Zwischenkreiskapazität eines jeweiligen leistungselektronischen Wandlers, da die Zwischenkreisspannung an die Netzspannung gekoppelt ist. Mit anderen Worten kann ein größerer Spannungshub genutzt werden. Alternativ kann ein kleiner dimensionierter Energiespeicher verwendet werden, um eine wie bisher erhaltene Funktionalität nutzen zu können.

Im Ergebnis wird somit ein aktiver Filter mit aktivem Zwischenkreis in einem insbesondere als Gleichspannungsnetzwerk ausgebildeten Energieversorgungsnetzwerk bereitgestellt.

Als Energiespeicher kann ein Kondensator, eine Batterie, ein Superkondensator (kurz: Supercap oder SC, manchmal auch Ultrakondensator genannt) oder ein Schwungradspeicher verwendet werden. Grundsätzlich kommt als Energiespeicher jede Art von Energiespeicher in Betracht, welcher in der Lage ist, in kurzer Zeit hoher Ströme aufzunehmen oder abzugeben.

Eine erfindungsgemäße Ausgestaltung sieht vor, dass die Speicherkapazität der Kommutierungskapazität eines jeweiligen leistungselektronischen Wandlers zwischen 10 µF bis 100 µF, insbesondere 10 µF, beträgt. Erfindungsgemäß beträgt die Speicherkapazität des Energiespeichers mehr als ein mF, insbesondere mehr als 10 mF.

Die Schaltvorrichtung ist erfindungsgemäß ein leistungselektronischer Wandler, insbesondere ein Hochsetzsteller oder ein Tiefsetzsteller. Die Schaltvorrichtung kann auch als hart oder weich schaltender isolierter Wandler, wie z.B. ein DAB, SRC, Phaseshift, und dergleichen ausgebildet sein. Der Energiespeicher ist dabei mit dem Ausgang der Schaltvorrichtung bzw. des leistungselektronischen Wandlers verbunden und über diese bzw. diesen, durch die Recheneinheit steuerbar, mit der Busleitung verbindbar. Auf diese Weise kann die Schaltvorrichtung, welche durch die Recheneinheit steuerbar ist, nicht nur eine Energiebalancierung vornehmen, indem entweder Energie an die Busleitung übertragen oder von dieser aufgenommen wird, sondern auch eine aktive Filterung von Spannungsoszillationen übernehmen.

Es ist weiterhin zweckmäßig, wenn die Schaltvorrichtung eine Strombegrenzungseinheit, insbesondere zur Limitierung der Kurzschlussleistung, umfasst. Die Strombegrenzung erfolgt insbesondere durch den stromgeregelten Betrieb des elektronischen Wandlers, z.B. des Hochsetzstellers.

Es ist weiterhin zweckmäßig, wenn die Schaltvorrichtung eine Filtereinheit für Spannungsoszillationen umfasst. Die Filtereinheit für Spannungsoszillationen kann durch die Bauart der Schaltvorrichtung selbst bereitgestellt sein oder durch zusätzliche Bauelemente realisiert sein.

Eine weitere zweckmäßige Ausgestaltung sieht vor, dass die Schaltvorrichtung durch die Recheneinheit derart ansteuerbar ist, dass eine vorbestimmte Energiemenge von dem Energiespeicher an die Busleitung abgebbar ist. Alternativ oder zusätzlich kann die Schaltvorrichtung durch die Recheneinheit auch derart ansteuerbar sein, dass eine vorbestimmte Energiemenge von der Busleitung von dem Energiespeicher aufnehmbar ist.

Es ist weiterhin zweckmäßig, wenn die Schaltvorrichtung derart ausgebildet ist, dass der Energiespeicher galvanisch isoliert oder galvanisch mit der Busleitung verbunden ist. Eine galvanische Isolation kann beispielsweise durch einen Transformator realisiert werden.

Es ist weiterhin zweckmäßig, wenn bei einer Mehrzahl an Energiespeichern diese räumlich verteilt über zugeordnete Schaltvorrichtungen an die Busleitung angeschlossen sind.

Die Erfindung wird nachfolgend näher anhand eines Ausführungsbeispiels in der Zeichnung beschrieben. Es zeigen:
- Fig. 1: eine schematische Darstellung eines beispielhaften, aus dem Stand der Technik bekannten Energieversorgungsnetzwerks; und
- Fig. 2: eine schematische Darstellung eines beispielhaften, erfindungsgemäß ausgebildeten Energieversorgungsnetzwerks.

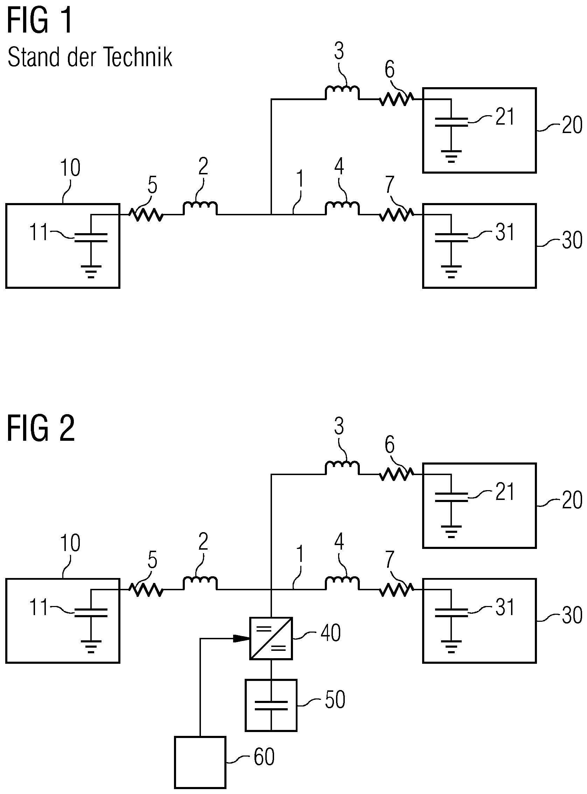

Fig. 1 zeigt eine schematische Darstellung eines beispielhaften, aus dem Stand der Technik bekannten Energieversorgungsnetzwerks. In der folgenden Beschreibung wird davon ausgegangen, dass es sich bei dem Energieversorgungsnetzwerk um ein Gleichspannungsnetzwerk handelt.

Das in Fig. 1 gezeigte Energieversorgungsnetzwerk umfasst eine Busleitung 1, z.B. in Gestalt einer DC-Verschienung. Die Busleitung 1 kann eine Länge von wenigen Metern bis zu einigen 100 Metern aufweisen. An die Busleitung 1 ist eine Anzahl an nicht näher dargestellten Komponenten angeschlossen, wobei die Komponenten Energie erzeugende Komponenten, Energie verbrauchende Komponenten oder Energie speichernde Komponenten sein können. Jede der Komponenten ist beispielhaft über einen zugeordneten leistungselektronischen Wandler 10, 20, 30 an die Busleitung 1 angeschlossen. Der leistungselektronische Wandler ist in Abhängigkeit der Komponente entweder ein DC/DC-Wandler oder ein DC/AC-Wandler oder ein AC/DC-Wandler.

Jeder der leistungselektronischen Wandler 10, 20, 30, die auch als Stromrichter bezeichnet werden, umfasst eine exemplarisch dargestellte Zwischenkreiskapazität 11, 21, 31. Zusammen mit einer Leitungsimpedanz (Bezugszeichen 2, 3, 4 in jeweiligen Zweigen der Busleitung 1) und beispielhaft ebenfalls dargestellten Leitungswiderständen 5, 6 ,7 bilden die Zwischenkreiskapazitäten 11, 21, 31 ein schwingfähiges System. Die Zwischenkreiskapazitäten 11, 21, 31 haben bei dem in Fig. 1 dargestellten Ausführungsbeispiel die Aufgabe, neben einer Spannungsglättung eine Energiespeicherung im Fehlerfall vorzunehmen. Hierzu sind die Speicherkapazitäten der Zwischenkreiskapazitäten 11, 21, 31 der herkömmlich ausgebildeten leistungselektronischen Wandler 10, 20 ,30 derart ausgelegt, dass die Speicherkapazität es ihnen ermöglicht, einen Netzausfall von mehreren ms bei einer vorgegebenen Nennlast zu überbrücken.

Im Verbund können die Zwischenkreiskapazitäten 11, 21, 31 mehrere mF annehmen. Bei Leitungslängen der Busleitung 1 im Bereich von einem bis mehreren 100 Metern werden dadurch Resonanzfrequenzen im dreistelligen Hertz und einstelligen Kilohertz-Bereich erreicht. Diese Resonanzen können durch verschiedene Schalthandlungen, z.B. ein Ab- oder Zuschalten von elektrischen Komponenten, die mit den leistungselektronischen Wandlern 10, 20, 30 verbunden sind oder dynamischen Sollwertsprüngen angeregt werden.

Da das Anregen der Resonanzen unerwünscht ist, wird das in Fig. 2 näher gezeigte und nachfolgend beschriebene Energieversorgungsnetzwerk vorgeschlagen, welches es ermöglicht, die Resonanzfrequenz in einem derartigen Energieversorgungsnetzwerk möglichst hoch auszubilden und damit in dem Energieversorgungsnetzwerk eine belastungsbedingte Schwingungsanregung zu vermeiden.

Dem erfindungsgemäß vorgeschlagenen Energieversorgungsnetzwerk liegt die Überlegung zugrunde, dass die Resonanzfrequenz in unerwünschter Weise umso kleiner wird, je größer die Zwischenkreiskapazitäten der leistungselektronischen Wandler sind. Da diese jedoch, wie beschrieben, in Abhängigkeit einer notwendigen Energiespeicherung für einen Fehlerfall dimensioniert werden, konnte in der Vergangenheit ein Absinken der Resonanzfrequenzen nicht vermieden werden.

Das Energieversorgungsnetzwerk gemäß Fig. 2 umfasst zusätzlich zu dem in Fig. 1 gezeigten, aus dem Stand der Technik bekannten, Energieversorgungsnetzwerk einen Energiespeicher 50. Der Energiespeicher 50 kann ein Kondensator, eine Batterie, ein Superkondensator oder ein Schwingradspeicher sein. Der Energiespeicher 50 ist mittels Steuerung einer Schaltvorrichtung 40 durch eine Recheneinheit 60 selektiv mit der Busleitung 1 verbindbar.

Durch das Vorhandensein des zusätzlichen Energiespeichers 50 können die Speicherkapazitäten der Zwischenkreiskondensatoren 11, 21, 31 der leistungselektronischen Wandler 10, 20, 30 gegenüber der aus dem Stand der Technik bekannten Anordnung stark verringert werden. Die Zwischenkreiskapazitäten sind damit als Kommutierungskapazitäten 11, 21, 31 ausgebildet, deren Speicherkapazität derart gewählt ist, dass im Betrieb des Energieversorgungsnetzwerks eine Regelung des zugeordneten leistungselektronischen Wandlers 10, 20, 30 gewährleistet und bei einer Kommutierung eine Spannungsüberhöhung beherrscht wird. Demgegenüber ist die Speicherkapazität des Energiespeichers 50 wesentlich größer als die Speicherkapazität einer jeweiligen Kommutierungskapazität 11, 21, 31.

In der Praxis ist es erfindungsgemäß zweckmäßig, wenn die Speicherkapazität der Kommutierungskapazitäten 11, 21, 31 zwischen 10 µF und 100 µF, insbesondere 10 µF bis 50 µF, beträgt. Die Speicherkapazität des Energiespeichers 50 beträgt erfindungsgemäß 1 mF, insbesondere 10 mF, oder mehr.

Die Schaltvorrichtung 40 ist als leistungselektronischer Wandler, z.B. als Hochsetzsteller, ausgebildet. Wird die Schaltvorrichtung in einer der genannten Weisen ausgebildet, so umfasst diese eine Strombegrenzungseinheit, in dem die jeweils darin vorgesehenen leistungselektronischen Halbleiterschaltelemente durch die Recheneinheit 60 in geeigneter Weise angesteuert werden.

Obwohl in dem in Fig. 2 gezeigten Ausführungsbeispiel lediglich ein Energiespeicher 50 vorgesehen ist, kann bei entsprechend langer Busleitung 1 eine Mehrzahl an Energiespeichern räumlich verteilt an die Busleitung angeschlossen sein. Dabei ist jeder Energiespeicher über eine zugeordnete Schaltvorrichtung, welche durch eine einzige oder jeweils zugeordnete Recheneinheit steuerbar sind, an die Busleitung 1 angeschlossen. Ferner ist es möglich, die Schaltvorrichtung 40 galvanisch isoliert, z.B. unter Zwischenschaltung eines Transformators, an die Busleitung 1 zu schalten.

Durch das gesonderte Vorsehen eines Energiespeichers 50 kann auf einfache Weise das Ziel erreicht werden, die Resonanzfrequenz in einem hohen Bereich, insbesondere im Kilohertz-Bereich, vorzusehen. Je höher die Resonanzfrequenz ist, desto geringer ist die Wahrscheinlichkeit, dass das Energieversorgungsnetzwerk im Rahmen von Lastzyklen zu Schwingungen angeregt wird.

Durch die Separation der einzelnen Funktionen des Zwischenkreises eines jeweiligen leistungselektronischen Wandlers 10, 20, 30 kann eine Optimierung des Energieversorgungsnetzwerks erreicht werden. Hierzu erhalten die Zwischenkreiskondensatoren 11, 21, 31 eine minimale Ein-/Ausgangskapazität, welche als Kommutierungskapazität bezeichnet wird, und die in der Größe derart dimensioniert ist, dass ein Spannungsripple soweit minimiert ist, dass eine zugeordnete Regelung läuft. Ferner ist die Dimensionierung ausreichend, um eine Spannungsüberhöhung bei der Kommutierung zu beherrschen. Die Funktionalität des Energiespeichers wird demgegenüber über den zuschaltbaren Energiespeicher 50 realisiert. Die Schaltvorrichtung 40 übernimmt in der Bereitstellung der Energie im Netzausfall oder der Zwischenspeicherung von rotatorischer Energie bei Rückspeisung die Aufgabe, das Energieversorgungsnetzwerk in Form eines aktiven Filters zu stabilisieren.

## Patentansprüche

1. Energieversorgungsnetzwerk, umfassend:
- eine Busleitung (1) mit einer Leitungsimpedanz zur Energieverteilung;
- eine Anzahl an leistungselektronischen Wandlern (10, 20, 30) mit einer jeweiligen Kommutierungskapazität (11, 21, 31); und
- zumindest einen Energiespeicher (50), der mittels Steuerung einer Schaltvorrichtung (40) durch eine Recheneinheit (60) selektiv mit der Busleitung (1) verbindbar ist,
**dadurch gekennzeichnet,**
**dass** die Speicherkapazität der leistungselektronischen Wandler derart gewählt ist, dass im Betrieb des Energieversorgungsnetzwerks eine Regelung des zugeordneten leistungselektronischen Wandlers gewährleistet und bei einer Kommutierung eine Spannungsüberhöhung beherrscht wird, und dass die Speicherkapazität des Energiespeichers wesentlich größer als die Speicherkapazität einer jeweiligen Kommutierungskapazität ist,
**dass** die Speicherkapazität der Kommutierungskapazität (11, 21, 31) zwischen 10 bis 100 µF, insbesondere 10 bis 50 µF, beträgt, dass die Speicherkapazität des Energiespeichers (50) größer als 1 mF, insbesondere 10 mF ist und dass die Schaltvorrichtung (40) ein leistungselektronischer Wandler, insbesondere ein Hoch-/Tiefsetzsteller, ein hart oder weich schaltender isolierter Wandler, ist.

2. Energieversorgungsnetzwerk nach Anspruch 1, bei dem der zumindest eine Energiespeicher (50) ein Kondensator, eine Batterie, ein Superkondensator oder ein Schwungradspeicher ist.

3. Energieversorgungsnetzwerk nach einem der vorhergehenden Ansprüche, bei dem die Schaltvorrichtung (40) eine Strombegrenzungseinheit zur Limitierung der Kurzschlussleistung umfasst.

4. Energieversorgungsnetzwerk nach einem der vorhergehenden Ansprüche, bei dem die Schaltvorrichtung (40) eine Filtereinheit für Spannungsoszillationen umfasst.

5. Energieversorgungsnetzwerk nach einem der vorhergehenden Ansprüche, bei dem die Schaltvorrichtung (40) durch die Recheneinheit (60) derart ansteuerbar ist, dass eine vorbestimmte Energiemenge von dem Energiespeicher (50) an die Busleitung (1) abgebbar ist.

6. Energieversorgungsnetzwerk nach einem der vorhergehenden Ansprüche, bei dem die Schaltvorrichtung (40) derart ausgebildet ist, dass der Energiespeicher (50) galvanisch isoliert oder galvanisch mit der Busleitung (1) verbunden ist.

7. Energieversorgungsnetzwerk nach einem der vorhergehenden Ansprüche, bei dem bei einer Mehrzahl an Energiespeichern (50) diese räumlich verteilt über zugordnete Schaltvorrichtungen (40) an die Busleitung (1) angeschlossen sind.

## Claims

1. Energy supply network, comprising:
- a bus line (1) having a line impedance for energy distribution;
- a number of power electronic converters (10, 20, 30) having a respective commutation capacitance (11, 21, 31); and
- at least one energy store (50) which is selectively connectable to the bus line (1) by means of control of a switching device (40) by a computing unit (60),
**characterized in that**
the storage capacitance of the power electronic converter is chosen such that, during operation of the energy supply network, closed-loop control of the assigned power electronic converter is ensured and an excessive voltage increase is managed during commutation, and **in that** the storage capacitance of the energy store is significantly greater than the storage capacitance of a respective commutation capacitance, **in that** the storage capacitance of the commutation capacitance (11, 21, 31) has a value of between 10 and 100 µF, in particular 10 and 50 µF, **in that** the storage capacitance of the energy store (50) is greater than 1 mF, in particular 10 mF, and **in that** the switching device (40) is a power electronic converter, in particular a boost/buck converter, or a hard- or soft-switching insulated converter.

2. Energy supply network according to Claim 1, wherein the at least one energy store (50) is a capacitor, a battery, a supercapacitor or a flywheel.

3. Energy supply network according to either of the preceding claims, wherein the switching device (40) comprises a current limiting unit for limiting the short-circuit power.

4. Energy supply network according to any of the preceding claims, wherein the switching device (40) comprises a filter unit for voltage oscillations.

5. Energy supply network according to any of the preceding claims, wherein the switching device (40) is drivable by the computing unit (60) such that a predetermined quantity of energy is able to be released from the energy store (50) to the bus line (1).

6. Energy supply network according to any of the preceding claims, wherein the switching device (40) is configured such that the energy store (50) is galvanically isolated or galvanically connected to the bus line (1).

7. Energy supply network according to any of the preceding claims, wherein, in the case of a plurality of energy stores (50), the latter are connected to the bus line (1) in a spatially distributed manner by way of assigned switching devices (40).

## Revendications

1. Réseau d'alimentation en énergie, comprenant :
- une ligne (1) de bus ayant une impédance de ligne pour la répartition de l'énergie ;
- un certain nombre de convertisseurs (10, 20, 30) électroniques de puissance ayant une capacité (11, 21, 31) de commutation respective ; et
- au moins un accumulateur (50) d'énergie, qui peut être connecté sélectivement à la ligne (1) de bus, au moyen d'une commande d'un montage (40) de coupure, par une unité (60) informatique,
**caractérisé**
**en ce que** la capacité d'accumulation des convertisseurs électroniques de puissance est choisie de manière à assurer, lorsque le réseau d'alimentation en énergie est en fonctionnement, une régulation du convertisseur électronique de puissance associé et à maîtriser, lors d'une commutation, une surtension et en ce que la capacité d'accumulation de l'accumulateur d'énergie est sensiblement plus grande que la capacité d'accumulation d'une capacité de commutation respective,
**en ce que** la capacité d'accumulation de la capacité (11, 21, 31) de commutation est comprise entre 10 et 100 µF, notamment entre 10 et 50 µF, en ce que la capacité d'accumulation de l'accumulateur (50) d'énergie est plus grande que 1 µF, en étant notamment de 10 µF, et en ce que le montage (40) de coupure est un convertisseur électronique de puissance, notamment un survolteur/dévolteur ou un convertisseur isolé à coupure dure ou douce.

2. Réseau d'alimentation en énergie suivant la revendication 1, dans lequel le au moins un accumulateur (50) d'énergie est un condensateur, une batterie, un supercondensateur ou un accumulateur à volant.

3. Réseau d'alimentation en énergie suivant l'une des revendications précédentes, dans lequel le montage (40) de coupure comprend une unité de limitation de courant pour limiter la puissance de court circuit.

4. Réseau d'alimentation en énergie suivant l'une des revendications précédentes, dans lequel le montage (40) de coupure comprend une unité de filtrage des oscillations de tension.

5. Réseau d'alimentation en énergie suivant l'une des revendications précédentes, dans lequel le montage (40) de coupure peut être commandé par l'unité (60) informatique, de manière à ce qu'une quantité d'énergie définie à l'avance puisse être cédée par l'accumulateur (50) d'énergie à la ligne (1) de bus.

6. Réseau d'alimentation en énergie suivant l'une des revendications précédentes, dans lequel le montage (40) de coupure est constitué de manière à relier l'accumulateur (50) d'énergie, de manière isolée galvaniquement ou galvaniquement, à la ligne (1) de bus.

7. Réseau d'alimentation en énergie suivant l'une des revendications précédentes, dans lequel, pour une pluralité d'accumulateurs (50) d'énergie, ceux-ci sont raccordés en étant répartis dans l'espace à la ligne (1) de bus par des montages (40) de coupure associés.
